# EUROPÄISCHE PATENTSCHRIFT

(11) **EP 0 702 826 B1**
(45) Veröffentlichungstag und Bekanntmachung des Hinweises auf die Patenterteilung: **13.08.1997**
(21) Anmeldenummer: 94916888.4
(22) Anmeldetag: 06.06.1994
(51) Int. Cl.: G11B 17/22

(54) **PLATTENABSPIELGERÄT**
RECORD PLAYER
TOURNE-DISQUES

(30) Priorität: 12.06.1993 DE 4319551
(43) Veröffentlichungstag der Anmeldung: 27.03.1996
(60) Teilanmeldung: 97102195.1
(73) Patentinhaber: NSM AKTIENGESELLSCHAFT, 55411 Bingen (DE)
(72) Erfinder: MENKE, Wilhelm, D-55411 Bingen (DE); HEIDERSBERGER, Börge, D-55411 Bingen (DE)
(74) Vertreter: Becker, Bernd, Dipl.-Ing.
(86) Internationale Anmeldenummer: DE9400639
(87) Internationale Veröffentlichungsnummer: WO9429861

(56) Entgegenhaltungen:
- EP-A- 0 138 005
- WO-A-90/04845
- WO-A-92/13343
- WO-A-93/08569
- DE-A- 4 005 058
- DE-A- 4 205 912
- GB-A- 2 164 781
- US-A- 4 993 010

## Beschreibung

Die Erfindung bezieht sich auf ein Plattenabspielgerät mit zwei einander gegenüberliegenden Plattenmagazinen, die eine Vielzahl übereinanderliegend in Aufnahmefächern gelagerter, jeweils eine Platte aufnehmender Plattenhalter aufweisen, und mit einer in Stapelrichtung des Plattenmagazins bewegbaren Transporteinrichtung zum Austausch einer gewünschten Platte mit dem zugehörigen Plattenhalter zwischen dem Aufnahmefach und einer Abspieleinheit, wobei die Transporteinrichtung einehorizontal verfahrbare, einen Schlitten mit einem Greifarm aufweisende Auszugeinrichtung umfaßt.

Aus der EP 0 138 005 B1 ist eine Plattenwechselvorrichtung bekannt, bei der zwischen zwei vertikalen Plattenhüllen mit Platten speichernden Plattenmagazinen eine vertikal verfahrbare Plattenentnahmevorrichtung angeordnet ist, die einen auf dieser horizontal verfahrbaren Plattenhüllengreifer trägt. Dieser Plattenhüllengreifer ist mit zwei Greifeinrichtungen versehen, von denen sich wahlweise eine in ihrer Bereitschaftsposition in dem linken oder rechten Plattenmagazin befindet, während die andere Greifeinrichtung eine entnommene Plattenhülle in der Mittenposition hält, in der sich die Platte oberhalb des Plattentellers des Abspielgerätes befindet. Jedem Plattenmagazin ist sonach eine gesonderte Greifeinrichtung zugeordnet. Jede Greifeinrichtung umfaßt jeweils zwei Hakenelemente, die elektromagnetisch betätigbar sind, wenn die Plattenentnahmevorrichtung in einer ersten Position oder einer zweiten Position zur Entnahme einer Plattenhülle aus dem ersten bzw. dem zweiten Plattenmagazin steht. Sonach bedingt zum einen die Anordnung zweier Greifeinrichtungen und zum anderen die mechanische Steuerung der beweglichen Greifeinrichtungen einen erheblichen fertigungstechnischen Aufwand.

Weiterhin offenbart die EP 0 280 263 A2 ein Plattenabspielgerät, bei dem die Platten in zwei Stapeln abgelegt werden und in zwei Abspielstationen abgespielt werden können. Die einzelnen Platten können von zwei Seiten abgespielt werden. Sie werden nach dem Abspielen nicht mehr in denselben Stapel zurückgelegt. Bei diesem Gerät ist ein unendliches Förderband als Auszugeinrichtung ausgebildet. Die Stellung der Auszugeinrichtung kann bei diesem Gerät nicht zur Kontrolle der Plattenposition herangezogen werden. Bei geringsten Unregelmäßigkeiten im Transport der Platten, beispielsweise bei der Abgabe der Platten aus dem Abspielgerät oder durch Erschütterungen der Anlage, sind daher empfindliche Störungen des Betriebes zu erwarten, die nicht hingenommen werden können.

Ferner zeigt die EP 0 439 483 B1 ein Plattenabspielgerät mit zwei einander gegenüberliegenden Plattenmagazinen mit einer in Stapelrichtung der Plattenmagazine bewegbaren Transporteinrichtung zur Hin- und Her-Beförderung einer Platte zwischen den Plattenmagazinen und einer Abspieleinheit und mit zwei unabhängig voneinander steuerbaren, auf der Transporteinrichtung horizontal verfahrbaren Auszugeinrichtungen mit jeweils einem Greifarm. Jeder Greifarm ist in einem hin- und herbeweglichen Schlitten ein- und ausfahrbar gelagert und in der Ausgangsstellung des Schlittens durch einen federbelasteten Winkelhebel mit zugeordnetem Anschlaghebel in seiner eingefahrenen Stellung derart gehalten, daß er bei einer Bewegung des Schlittens aus der Ausgangsstellung von dem Winkelhebel in die ausgefahrene, in eine Ausnehmung eines Plattenhalters für eine Platte eingreifende Stellung bringbar ist. Demzufolge ist jedem Plattenmagazin ein bewegbarer, gesondert zu steuernder Greifarm zugeordnet, was eine relativ aufwendige Konstruktion bedingt.

Der Erfindung liegt die Aufgabe zugrunde, ein Plattenabspielgerät der eingangs genannten Art zu schaffen, das für die Beförderung eines Plattenhalters mit der gewünschten Platte von dem jeweiligen Plattenmagazin zu der jeweiligen Abspieleinheit und zurück einen einfachen und kompakten Aufbau ermöglicht.

Diese Aufgabe wird erfindungsgemäß dadurch gelöst, daß die Auszugeinrichtung nur einen einzigen, starr mit dem Schlitten verbundenen Greifarm aufweist, der beide Plattenmagazine bedientun dhorizontal zwischen und vertikal in den Plattenmagazinen verfahrbar ist, wobei der Greifarm aus seiner eingenommenen Auswahlposition in dem einen oder anderen Plattenmagazin in übereinanderliegenden Ausnehmungen der Plattenhalter des jeweiligen Plattenmagazins vertikal verfahrbar ist.

Der mit der Erfindung erzielte wesentliche Vorteil liegt in der Möglichkeit, mit einem einzigen Greifarm sowohl eine Platte aus dem einen als auch aus dem anderen Plattenmagazin zu befördern, woraus insgesamt eine verhältnismäßig kleine Baugröße des Plattenabspielgerätes resultiert. Hierbei sind keine elektrischen Aktoren, Sensoren und Schleppkabel an der Transporteinrichtung erforderlich. Eine weitere wesentliche Vereinfachung ergibt sich durch die starre Befestigung des Greifarms an dem Schlitten der Auszugeinrichtung, da hierdurch eine gesonderte Verschwenk- oder Verschiebeeinrichtung für den Greifarm in Bezug auf seine Lage zur Auszugeinrichtung entfällt. Der Greifarm wird also bei der Auswahl einer bestimmten Platte von einer Steuereinheit des Plattenabspielgerätes so gesteuert, daß er zunächst in das Plattenmagazin fährt, in welchem sich die ausgewählte Platte befindet, und dann innerhalb dieses Plattenmagazins bis zu der Position der ausgewählten Platte verfahren, in der der Greifer den Plattenhalter mit der ausgewählten Platte aus dem Plattenmagazin entnehmen kann. Anschließend befördert der Greifarm den Plattenhalter mit der ausgewählten Platte in eine zu dem Plattenteller der Abspieleinheit ausgerichtete Position auf der Transporteinrichtung, die die Platte dann der Abspieleinheit zuführt. Nach dem Abspielen der Platte wird diese wieder mit Hilfe der Transporteinrichtung und des Greifarmes in dem betreffenden Plattenmagazin abgelegt.

Um eine leichte Entnahme der ausgewählten Platte aus dem betreffenden Plattenmagazin zu erreichen, ist nach einer Ausgestaltung der Erfindung der Greifarm aus seiner Auswahlposition in dem einen oder anderen Plattenmagazin in eine Auszugposition zur Herausnahme eines bestimmten Plattenhalters bewegbar, in der er mit einer sich an die Ausnehmung des Plattenhalters anschließenden, auf halber Höhe des Plattenhalters abgesetzten Beförderungsnase fluchtet.

Zur genauen Ausrichtung einer ausgewählten Platte zu der Abspieleinheit ist nach einer vorteilhaften Weiterbildung der Erfindung der Greifarm über eine der Transporteinrichtung zugeordnete Plattenhalter-Erkennungseinrichtung in eine die ausgewählte Platte mit dem Plattenhalter konzentrisch zu dem Plattenteller der Abspieleinheit festlegende Zentrierposition verfahrbar.

Bevorzugt ist der Plattenhalter-Erkennungseinrichtung ein Fühler derart zugeordnet, daß bei einer Beaufschlagung des Fühlers durch einen aus einem Plattenmagazin herausgenommenen Plattenhalter der starr mit dem Schlitten der Auszugeinrichtung verbundene Greifarm in eine die ausgewählte Platte mit dem Plattenhalter konzentrisch zu dem Plattenteller der Abspieleinheit festlegende Zentrierposition fährt. Durch diese Maßnahme ist bei konstruktiv geringem Aufwand stets eine exakte Ausrichtung der ausgewählten Platte zu der Abspieleinheit gewährleistet.

Bei einer weiteren Ausgestaltung der Erfindung ist die gleitbeweglich auf der Tragstange gelagerte Transporteinrichtung über einen Riemenantrieb mit drehrichtungsumkehrbarem Antriebsmotor auf- und abbewegbar. Selbstverständlich kann statt des Riemenantriebes auch ein Seilzug-, Spindelantrieb oder dergleichen eingesetzt werden.

Um eine zuverlässige Führung der Transporteinrichtung zu erzielen, weist nach einer Weiterbildung der Erfindung die Transporteinrichtung seitlich einen Einschnitt auf, der gleitbeweglich eine vertikale, gehäusefeste Führungsstange umgreift.

Bevorzugt trägt der Antriebsmotor der Transporteinrichtung auf seiner Welle eine Codescheibe, die mit einem Positionsimpulse erzeugenden Sensor zusammenwirkt. Dadurch ist ein teilungsgenaues Halten der Transporteinrichtung vor den Aufnahmefächern der Plattenmagazine gewährleistet. Zweckmäßigerweise ist der Transporteinrichtung ein Sensor zur Feststellung ihrer Ausgangsstellung unmittelbar oberhalb der Abspieleinheit zugeordnet.

Zur Erreichung eines sicher funktionierenden Antriebs des Greifarms steht nach einer weiteren Ausgestaltung der Erfindung die drehbeweglich gelagerte Tragstange der Transporteinrichtung über eine Rutschkupplung und das Getriebe mit dem drehrichtungsumkehrbaren Antriebsmotor in Verbindung, und die Tragstange trägt innerhalb der Transporteinrichtung ein auf ihr verschiebbares, drehfestes Zahnrad, das mit mindestens einem Zahnrad kämmt, das mit einer am Schlitten des Greifarms angebrachten Zahnstange in Eingriff steht.

Zweckmäßigerweise ist die Tragstange mit einer Codescheibe fest verbunden, die durch ortsfeste Sensoren zur Erzeugung von Schaltimpulsen für den Antriebsmotor der Tragstange läuft. Bevorzugt ist die Codescheibe als Loch oder Markierungsscheibe ausgebildet.

Nach einer vorteilhaften Weiterbildung der Erfindung umfaßt die Plattenhalter-Erkennungseinrichtung den im Gehäuse der Transporteinrichtung federbelastet geführten, in die Bewegungsbahn des Plattenhalters vorstehenden mechanischen Fühler, der bei einer Beaufschlagung durch den Plattenhalter die Drehbewegung des auf der Tragstange angeordneten Zahnrades begrenzt. Hierbei ist zweckmäßigerweise auf der Oberseite des auf der Tragstange angeordneten Zahnrades ein Stift vorgesehen, der im nichtbetätigten Zustand des Fühlers durch einen Durchgang in der Unterseite des Fühlers bewegbar ist und der im betätigten Zustand des Fühlers in der Zentrierstellung des Plattenhalters zu der Abspieleinheit an einem in den Durchgang hineinragenden Anschlag anliegt. Weiterhin weist der Fühler bevorzugt auf seiner Oberseite im vorderen Bereich einen Steg auf, der im nichtbetätigten Zustand des Fühlers federbelastet an einem gehäusefesten Anschlag anliegt. Zweckmäßigerweise liegt dem gehäusefesten Anschlag für den Steg des Fühlers ein gehäusefester Anschlag im Bereich der Tragstange gegenüber, an dem sich eine Druckfeder abstützt, die mit ihrem anderen Ende an dem Steg des Fühlers anliegt.

Damit der Fühler einen von der Transporteinrichtung aufgenommenen Plattenhalter erkennen kann, übergreift in Ausgestaltung der Erfindung der auf einer Halterung geführte Fühler mit seinem vorderen Bereich eine gehäusefeste Führungsschiene für den Plattenhalter.

Zur sicheren Aufnahme eines Plattenhalters in der Transporteinrichtung weist bei einer weiteren vorteilhaften Ausgestaltung des Erfindungsgegenstandes das Gehäuse der Transporteinrichtung einen Tragarm mit einer der gehäusefesten Führungsschiene gegenüberliegenden Halteschiene für den Plattenhalter auf, wobei der Halteschiene mindestens ein Federelement zugeordnet ist, das den Plattenhalter in seiner Zentrierstellung zur Abspieleinheit sichert. Zweckmäßigerweise ist das Federelement an der Halteschiene angespritzt und rastet in einen zugehörigen Einschnitt des Plattenhalters ein. Alternativ hierzu besteht bevorzugt das Federelement aus einem U-förmigen Bügel, dessen Schenkel in Vertiefungen am Tragarm eingesetzt sind und dessen Steg mittig eine Sicke aufweist, die in einen an der entsprechenden Längsseite des Plattenhalters liegenden Einschnitt eingreift.

Zur Erleichterung des Plattenauswechselns in den Plattenmagazinen ist bei einer vorteilhaften Ausgestaltung der Erfindung jedes von der Vorderseite des Gehäuses aus schubfachartig in das Gehäuse eingesetzte Plattenmagazin durch mindestens eine lösbare Verbindung in seiner Position gesichert. Zweckmäßigerweise ist die lösbare Verbindung zwischen dem Plattenmagazin und dem Gehäuse als Klipsverbindung ausgebildet.

Zur sicheren Halterung der Plattenmagazine weist bevorzugt das Gehäuse für die Aufnahme eines jeden Plattenmagazins zwei gegenüberliegende Führungsschienen auf, die mit einer entsprechenden Nut in der Bodenwand bzw. in der Deckenwand des Plattenmagazins korrespondieren. Zweckmäßigerweise ist hierbei in jede Führungsschiene eine Klipszunge mit vorstehender Klipsnase eingeformt, die in eine zugehörige Öffnung in der Bodenwand bzw. der Deckenwand des Plattenmagazins einrastet.

Bei einer weiteren Ausgestaltung der Erfindung sind die Plattenmagazine von der Oberseite des Gehäuses aus vertikal auswechselbar in das Gehäuse eingesetzt. Durch diese Maßnahme ist seitlich neben dem Plattenabspielgerät kein Freiraum für den Austauschvorgang der Plattenmagazine erforderlich.

Bevorzugt besteht das Gehäuse aus einer Bodenplatte und einer Deckenplatte, die lediglich durch Verbindungselemente miteinander verbunden sind, wobei die Deckenplatte abnehmbar ist, und die Verbindungselemente in ihrer Länge austauschbar sind. Ein derartiges Gehäuse läßt sich besonders kostengünstig herstellen. Darüber hinaus können unterschiedlich hohe Plattenmagazine verwendet werden. Bevorzugt sind hierbei die Verbindungselemente als Stangen, Winkelbleche, Profile oder dergleichen ausgebildet. Zwischen den Verbindungselementen der Bodenplatte und der Deckenplatte des Gehäuses sind zweckmäßigerweise Verkleidungselemente vorgesehen. Zur Erhöhung der Steifigkeit des Gehäuses ist bevorzugt zwischen der Deckenplatte und der Bodenplatte mindestens ein Stabilisierungselement vorgesehen.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Der der Erfindung zugrunde liegende Gedanke wird in der nachfolgenden Beschreibung anhand eines Ausführungsbeispieles, das in der Zeichnung dargestellt ist, näher erläutert. Es zeigt:

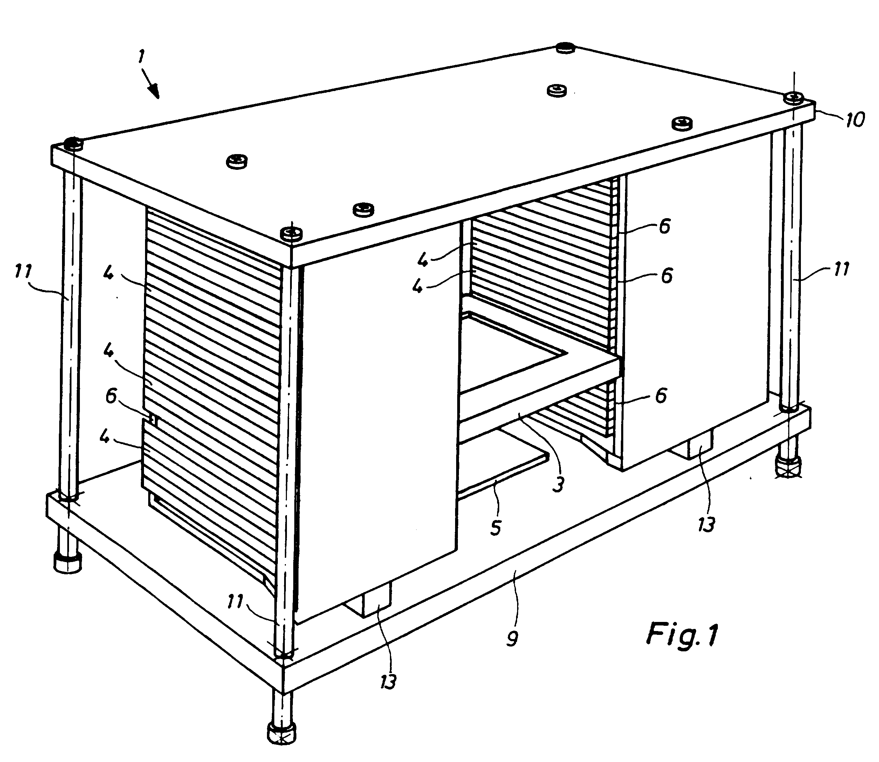

- Fig. 1: eine perspektivische Ansicht eines Plattenabspielgerätes,
- Fig. 2: einen Querschnitt durch das Plattenabspielgerät nach Fig. 1,

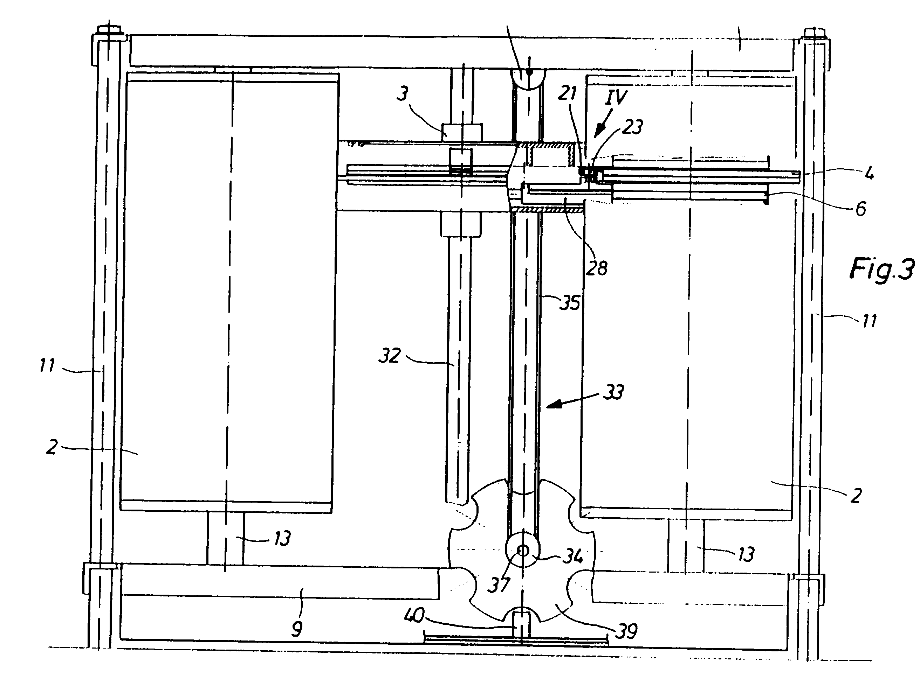

- Fig. 3: eine Rückansicht des Plattenabspielgerätes nach Fig. 1,

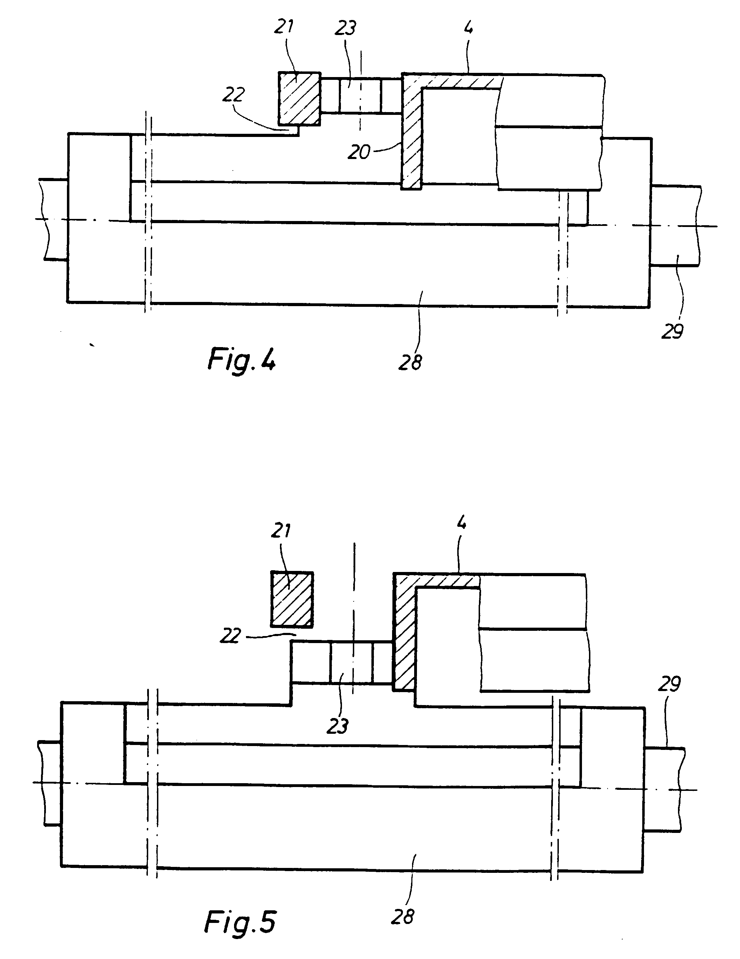

- Fig. 4: eine vergrößerte Darstellung der Einzelheit IV mit in der Auszugposition befindlichem Greifarm,
- Fig. 5: die Dartellung nach Fig. 4 mit in der Auswahlposition befindlichem Greifarm,

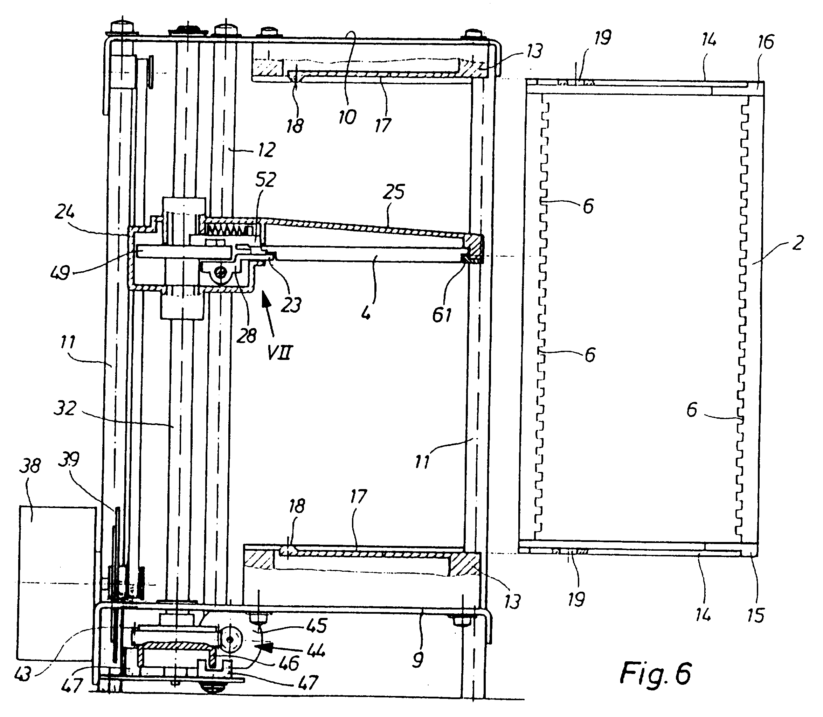

- Fig. 6: einen Längsschnitt durch das Plattenabspielgerät nach Fig. 1 mit herausgenommenem Plattenmagazin,

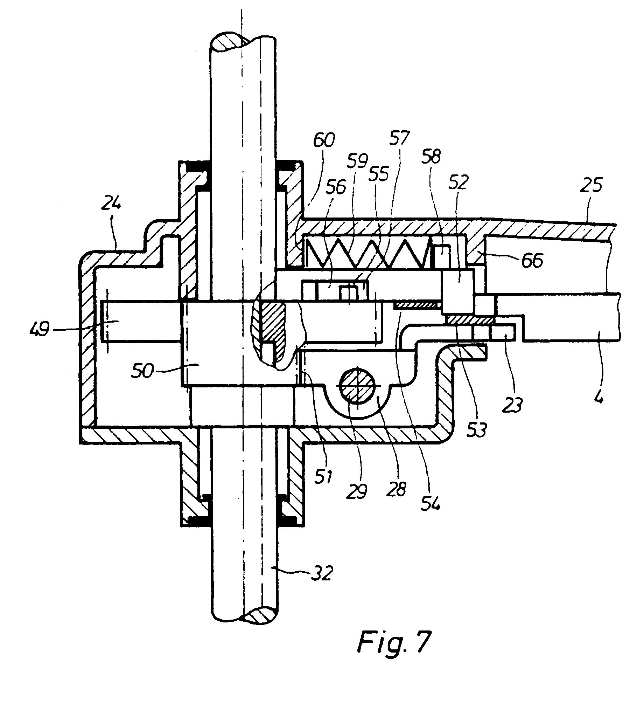

- Fig. 7: eine vergrößerte Darstellung der Einzelheit VII nach Fig. 6 mit in der Transporteinrichtung befindlichem Plattenhalter,

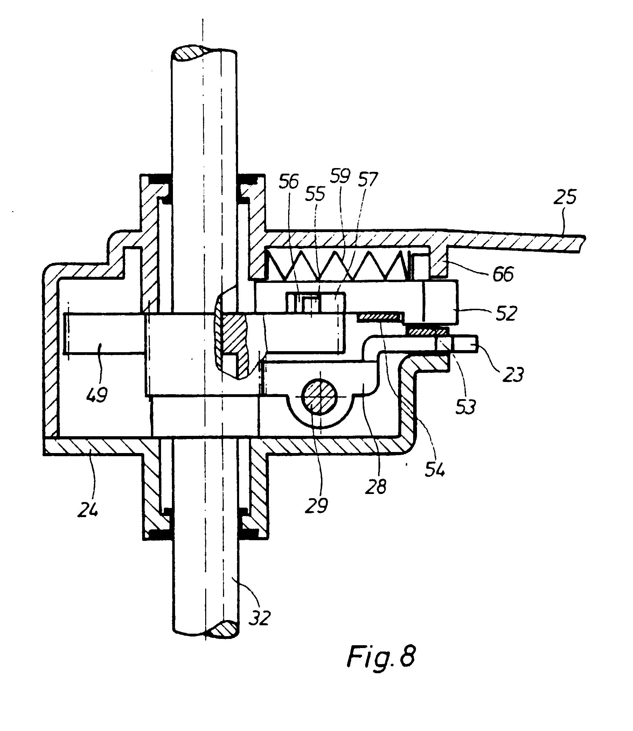

- Fig. 8: die Darstellung nach Fig. 7 ohne Plattenhalter und
- Fig. 9: eine alternative Ausführung des Plattenabspielgerätes nach Fig. 1 mit von oben auswechselbar in das Gehäuse einsetzbaren Plattenmagazinen.

Das mit einer nicht dargestellten zentralen Steuereinheit ausgerüstete Plattenabspielgerät, durch das auf den Platten gespeicherte Informationen ausgelesen und wiedergegeben werden können, besitzt ein Gehäuse 1 mit einer zugeordneten, nicht dargestellten Bedienungstafel, die verschiedene Tasten aufweist, beispielsweise eine Plattenauswahltaste, eine Plattenabspieltaste und eine Stopptaste. Seitlich im Gehäuse 1 sind gegenüberstehend Plattenmagazine 2 angeordnet. In dem Raum zwischen den Plattenmagazinen 2 befindet sich eine auf- und abverfahrbare Transporteinrichtung 3 für einen eine Platte aufnehmenden Plattenhalter 4. Eine Abspieleinheit 5 mit im einzelnen nicht dargestelltem Plattenteller, Motor zur Drehung des Plattentellers und Abspielkopf ist festehend zwischen und unterhalb der beiden gegenüberliegenden Plattenmagazine 2 angebracht.

Die Plattenmagazine 2 sind untereinander identisch aufgebaut und besitzen jeweils eine Vielzahl übereinanderliegend angeordneter Aufnahmefächer 6 für die Lagerung einer entsprechenden Anzahl an je eine Platte aufnehmender Plattenhalter 4. In dem Aufnahmefach 6 ist der Plattenhalter 4 durch mindestens ein am Plattenmagazin 2 angebrachtes Federelement 7 in seiner Lage gesichert. In dieser Lage steht der Plattenhalter 4 soweit über den beiden möglichen Auszugseiten des Plattenmagazins 2 über, daß er von einer Auszugeinrichtung 8 der Transporteinrichtung 3 erfaßt werden kann. Jedes Plattenmagazin 2 ist auswechselbar von der Vorderseite des Gehäuses 1 her schubfachartig in das Gehäuse 1 eingesetzt. Das Gehäuse 1 besteht aus einer rechteckförmigen Bodenplatte 9 und einer dazu im bestimmten Abstand liegenden, rechteckförmigen Deckenplatte 10, die durch an den Ecken angeordnete, als Stangen ausgebildete Verbindungselemente 11 miteinander verbunden sind. Die Deckenplatte 10 ist abnehmbar und die Verbindungselemente 11 sind in ihrer Länge austauschbar, so daß verschieden hohe Plattenmagazine 2 zum Einsatz kommen können. Des weiteren erstreckt sich zwischen der Bodenplatte 9 und der Deckenplatte 10 ein als Stange ausgebildetes Stabilisierungselement 12, um die Steifigkeit des Gehäuses 1 zu erhöhen. Auf der Innenseite der Bodenplatte 9 und auf der Innenseite der Deckenplatte 10 sind gegenüberliegend Führungsschienen 13 für jedes Plattenmagazin 2 angeordnet, die mit einer entsprechenden Nut 14 in der Bodenwand 15 bzw. in der Deckenwand 16 des Plattenmagazins 2 korrespondieren. In Einschubrichtung des Plattenmagazins 2 ist in jede Führungsschiene 13 eine Klipszunge 17 mit vorstehender Klipsnase 18 eingeformt, die im eingeschobenen Zustand des Plattenmagazins 2 in eine zugehörige Öffnung 19 in der Bodenwand 15 bzw. in der Deckenwand 16 des Plattenmagazins 2 einrastet. Beim Herausnehmen des Plattenmagazins 2 aus dem Gehäuse 1 lösen sich die Klipsverbindungen selbsttätig.

Der Plattenhalter 4 weist an seiner der Transporteinrichtung 3 zugewandten Seite jeweils im Endbereich eine durchgehende Ausnehmung 20 auf. An jede Ausnehmung 20 schließt sich nach außen hin eine auf halber Höhe des Plattenhalters 4 von unten her abgesetzte Beförderungsnase 21 an, unter der sich sonach ein freier Durchgang 22 zu der Ausnehmung 20 hin befindet. In eine der Ausnehmungen 20 kann entsprechend der Lage des Plattenhalters in dem einen oder anderen Plattenmagazin 2 durch den Durchgang 22 ein Greifarm 23 der Auszugeinrichtung 8 der Transporteinrichtung 3 fahren. Durch entsprechende Steuerung der Transporteinrichtung 3 ist der Greifarm 21 dann in den übereinanderliegenden Ausnehmungen 20 des Plattenmagazins 4 soweit vertikal verfahrbar, bis der Greifarm hinter der Beförderungsnase 21 des Plattenhalters 4 mit der ausgewählten Platte steht. Anschließend befördert der Greifarm 23 durch entsprechende Ansteuerung der Auszugeinrichtung 8 aufgrund seiner Anlage an der Beförderungsnase 21 den Plattenhalter 4 auf einen am Gehäuse 24 der Transporteinrichtung 3 angebrachten Tragarm 25, wobei der Verfahrweg des Greifarms 23 über eine der Transporteinrichtung 3 zugeordnete Plattenhalter-Erkennungseinrichtung 26 so gesteuert wird, daß der Plattenhalter 4 eine die ausgewählte Platte konzentrisch zu dem Plattenteller der Abspieleinheit 5 festlegende Zentrierposition einnimmt. Anschließend befördert die Transporteinrichtung 3 den Plattenhalter 4 zu der Abspieleinheit 7, in der dann die Informationsauslesung der Platte erfolgt. Nach Beendigung der Informationsauslesung wird die Platte mit dem Plattenhalter 4 in analoger Weise von der Transporteinrichtung 3 in ihr zugehöriges Aufnahmefach 6 zurückbefördert. Dann fährt die Transporteinrichtung 3 in ihre Ausgangsstellung unmittelbar oberhalb der Abspieleinheit 5, wobei die Ausgangsstellung über einen Sensor 27 überwacht wird.

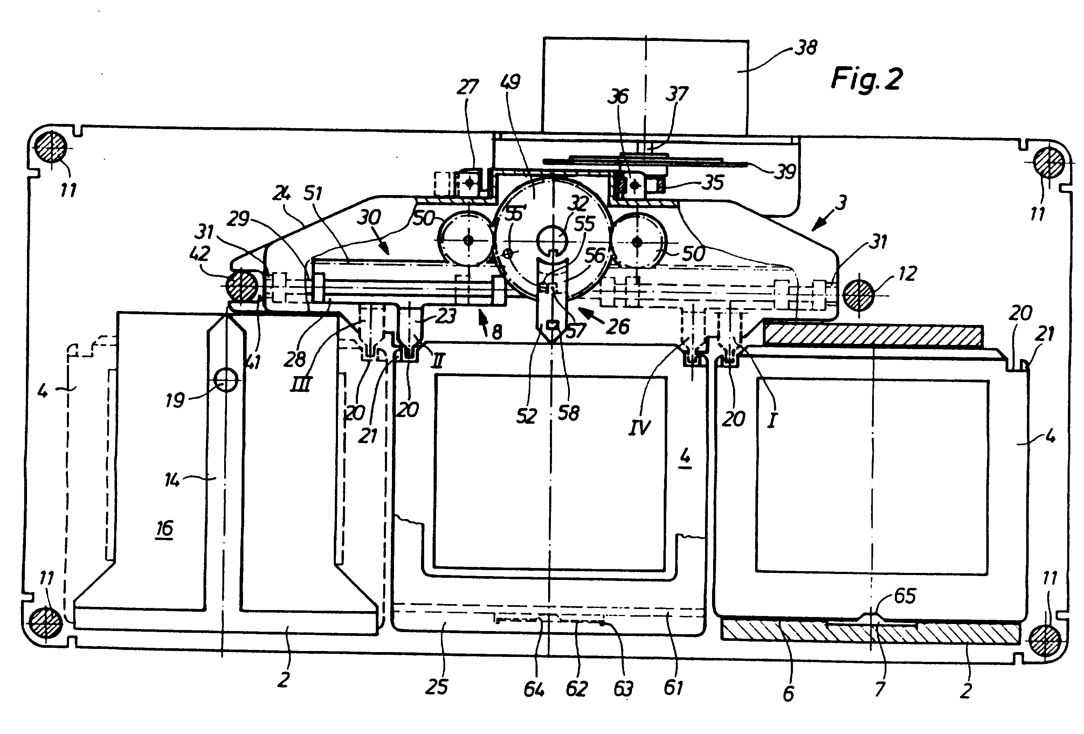

Der Greifarm 23 ist starr an einem Schlitten 28 angeformt, der auf einer im Gehäuse 24 der Transporteinrichtung 3 angeordneten Tragstange 29 mittels eines Antriebs 30 hin- und herbeweglich ist. Endseitig trägt die Tragstange 29 jeweils einen Anschlag 31 für den Schlitten 28. In Figur 2 sind vier mögliche Endstellungen I bis IV des Schlittens 28 eingezeichnet. Die Endstellung I des Schlittens 28 wird durch die Anlage des Schlittens 28 an dem rechten Anschlag 31 der Tragstange 29 bestimmt, in der der Greifarm 23 vertikal in den übereinanderliegenden Ausnehmungen 20 des rechten Plattenmagazins 4 verfahrbar ist. Nimmt der Greifarm 23 eine Auszugsposition hinter der Beförderungsnase 21 des die ausgewählte Platte enthaltenden Plattenhalters 4 ein, dann fährt der Schlitten 28 in die Endstellung II, die durch die Plattenhalter-Erkennungseinrichtung 26 bestimmt wird und in der der Plattenhalter 4 zu der Abspieleinheit 5 ausgerichtet ist. Nimmt demgegenüber der im rechten Plattenmagazin 2 befindliche Greifarm 23 die Position hinter einem freien Durchgang 22 eines Plattenhalters 4 ein, dann fährt der Schlitten 28 in die Endposition III, in der der Greifarm 23 in den übereinanderliegenden Ausnehmungen 20 der Plattenhalter 4 des linken Plattenmagazins 2 vertikal verfahrbar ist. Nimmt der Greifarm 23 im linken Plattenmagazin 2 eine Position hinter dem freien Durchgang 22 eines Plattenhalters 4 ein, dann kann der Schlitten 28 wieder in die Endposition 1 fahren. Nimmt dagegen der Greifarm 23 im linken Plattenmagazin 2 eine Stellung hinter der Beförderungsnase 21 eines Plattenhalters 4 ein, dann fährt der Schlitten 28 in die Endposition IV, die durch die Plattenhalter-Erkennungseinrichtung 26 bestimmt wird und in der der Plattenhalter 4 zu der Abspieleinheit 5 ausgerichtet ist.

Im rückwärtigen Bereich des Gehäuses 1 befindet sich mittig hinter den Plattenmagazinen 2 eine vertikal verlaufende Tragstange 32 auf der die Transporteinrichtung 3 über einen Antrieb 3 gleitbeweglich auf- und abbewegbar ist. Der Antrieb 33 umfaßt einen parallel zu der Tragstange 32 verlaufenden, über Umlenkrollen 34 geführten Zahnriemen 35, der über eine Klemmhalterung 36 mit dem Gehäuse 24 der Transporteinrichtung 3 verbunden ist. Die untere Umlenkrolle 34 sitzt auf der Welle 37 eines drehrichtungsumkehrbaren Antriebsmotors 38. Die Welle 37 des Antriebsmotors 38 trägt des weiteren eine als Flügelrad ausgebildete Codescheide 39, deren Flügel in einem als Gabelkoppler ausgebildeten Sensor 40 zur Erzeugung von Positionierimpulsen laufen. Mit Hilfe der Positionierimpulse wird eine exakte Zuordnung der Transporteinrichtung 3 und damit des Greifarmes 23 zu den Beförderungsnasen 21 bzw. zu den Durchgängen 22 der Plattenhalter 4 in den Plattenmagazinen 2 erreicht. Zur Stabilisierung der Transporteinrichtung 3 befindet sich seitlich an dem Gehäuse derselben ein Einschnitt 41, der gleitbeweglich eine sich zwischen der Bodenplatte 9 und der Deckenplatte 10 des Gehäuses 1 erstreckende Führungsstange 42 umgreift.

Die Tragstange 32 ist drehbeweglich in der Bodenplatte 9 und in der Deckenplatte 10 gelagert und unterhalb der Bodenplatte 9 über eine Rutschkupplung 43 und ein Schneckengetriebe 44 mit einem drehrichtungsumkehrbaren Antriebsmotor 45 verbunden. An der Rutschkupplung 43 ist eine als Markierungsscheibe ausgebildete Codescheibe 46 angebracht, die durch ortsfeste, als Gabelkoppler ausgebildete Sensoren 47 zur Erzeugung von Schaltimpulsen für den Antriebsmotor 45 läuft. Mit Hilfe der Codescheibe 46 wird der Antriebsmotor 45 abgeschaltet und die jeweilige Endstellung des Schlittens 28 bzw. des Greifarms 23 überwacht. Auf der Tragstange 32 ist innerhalb des Gehäuses 24 der Transporteinrichtung 3 ein verschiebbares, drehfestes Zahnrad 49 gelagert, das mit zwei gegenüberliegenden ortsfesten Zahnrädern 50 kämmt, die mit einer am Schlitten 28 des Greifarms 23 angebrachten Zahnstange 51 in Eingriff bringbar sind. Durch eine unterschiedliche Drehbewegung der Tragstange 32 wird also die Hin- und Herbewegung des Schlittens 28 erzeugt.

Die Plattenhalter-Erkennungseinrichtung 26 umfaßt einen federbeaufschlagten mechanischen Fühler 52, der in die Bewegungsbahn des auf einer gehäusefesten Führungsschiene 53 der Transporteinrichtung 3 geführten Plattenhalters 4 hineinragt. Der Fühler 52 stützt sich gleitbeweglich auf der Führungsschiene 53, einer gehäusefesten Halterung 54 und dem Zahnrad 49 ab. Auf der Oberseite des Zahnrades 49 befindet sich ein Stift 55, dem ein freier Durchgang 56 in der Unterseite des Fühlers 52 zugeordnet ist. In den Durchgang 56 ragt ein Anschlag 57 hinein, an den rechtsseitig oder linksseitig der Stift 55 im durch den Plattenhalter betätigten Zustand des Fühlers 22 zur Anlage kommt und damit die Drehbewegung des Zahnrades 49 und somit auch die Bewegung des Schlittens 28 in der Endposition II oder IV stoppt, je nachdem von welcher Seite der Stift 55 an den Anschlag 57 anschlägt. Wird der Fühler 52 nicht durch einen Plattenhalter 4 beaufschlagt, dann kann sich der Stift 55 durch den freien Durchgang 56 des Fühlers hindurch bewegen, wodurch das Zahnrad 49 solange angetrieben wird, bis der Schlitten 28 die Endposition I oder III erreicht hat und zwar je nachdem in welcher Drehrichtung das Zahnrad 49 angetrieben wurde. In der in Fig. 2 ausgezogenen Darstellung des Schlittens 28 befindet sich dieser in der Endstellung II, in der der Stift 55 des Zahnrades 49 linksseitig an dem Anschlag 57 des Fühlers 52 anliegt. Ist aus bemessungstechnischen Gründen der Weg des Stiftes 55 von einer linksseitigen Anlage zur rechtsseitigen Anlage an dem Anschlag 57 zu lang, um den Schlitten 28 in der Endstellung IV festzulegen, dann wird auf dem Zahnrad 49 im entsprechenden Abstand zu dem Stift 55 ein weiterer Stift 55' angebracht, der durch seine rechtsseitige Anlage an dem Anschlag 57 die Endstellung IV des Schlittens 28 bestimmt. Der Fühler 52 besitzt auf seiner Oberseite im vorderen Bereich einen Steg 58, an dem sich eine Druckfeder 59 abstützt, deren anderes Ende an einem gehäusefesten Anschlag 60 im Bereich der Tragstange 32 anliegt. Dem Anschlag 60 liegt im entsprechenden Abstand ein gehäusefester Anschlag 66 gegenüber, an den der Steg 58 des Fühlers 52 im unbeaufschlagten Zustand des Fühlers 52 durch den Plattenhalter 4 anliegt.

Der gehäusefesten Führungsschiene 53 der Transporteinrichtung 3 liegt eine am freien Ende des Tragarms 25 befestigte Halteschiene 61 für den Plattenhalter 4 gegenüber. Der Halteschiene 61 ist mittig ein als U-förmiger Bügel ausgebildetes Federelement 62 zugeordnet, dessen Schenkel 63 in Vertiefungen am Tragarm 25 eingesetzt sind und dessen Steg mittig eine Sicke 64 aufweist, die in der Zentrierposition des Plattenhalters 4 zu der Abspieleinheit 5 in einen entsprechenden Einschnitt 65 des Plattenhalters 4 eingreift. Dadurch ist der Plattenhalter in seiner Zentrierposition unverrückbar festgelegt.

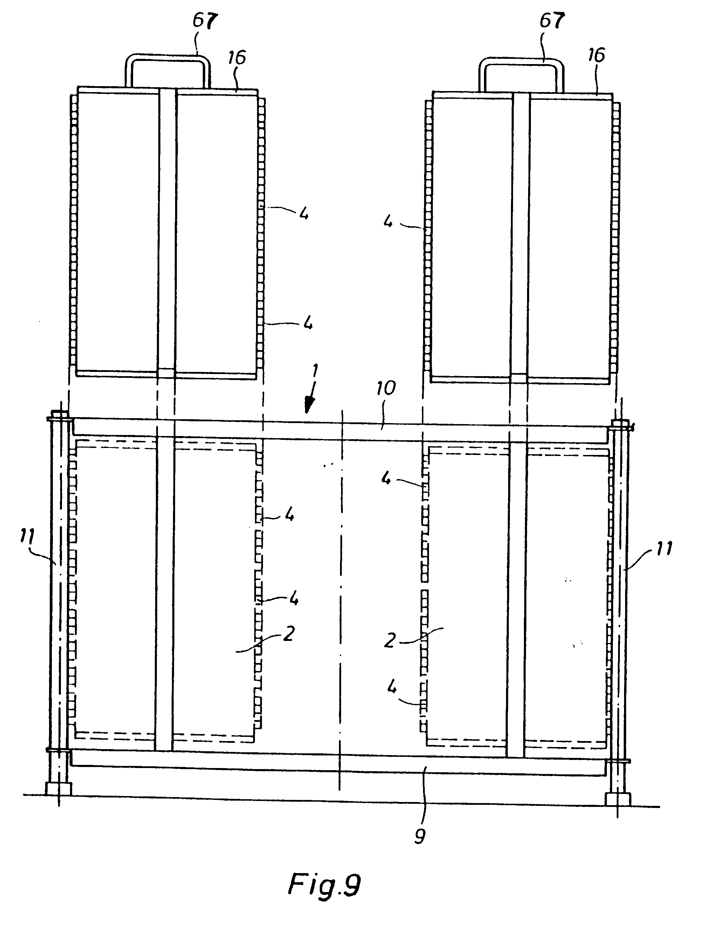

Bei der in Fig. 9 dargestellten Alternativausführung des Gehäuses 1 sind die Plattenmagazine 2 nach Abnahme der Deckenplatte 10 von oben in das Gehäuse 1 einsetzbar. Hierbei ist jedes Plattenmagazin 2 an seiner Deckenwand 16 mit einem umklappbaren Traggriff 67 versehen. Eine derartige Auswechselbarkeit der Plattenmagazine 2 ist besonders dann geboten, wenn im horizontalen Umfangsbereich des Gehäuses 1 kein Freiraum mehr zur Verfügung steht.

## Patentansprüche

1. Plattenabspielgerät mit zwei einander gegenüberliegenden Plattenmagazinen (2), die eine Vielzahl übereinanderliegend in Aufnahmefächern (6) gelagerter, jeweils eine Platte aufnehmender Plattenhalter (4) aufweisen, und mit einer in Stapelrichtung der Plattenmagazine (2) bewegbaren Transporteinrichtung (3) zum Austausch einer gewünschten Platte mit dem zugehörigen Plattenhalter (4) zwischen dem Aufnahmefach (6) und einer Abspieleinheit (5), wobei die Transporteinrichtung (3) eine horizontal verfahrbare, einen Schlitten (28) mit einem Greifarm (23) aufweisende Auszugeinrichtung (8) umfaßt, dadurch gekennzeichnet, daß die Auszugeinrichtung (8) nur einen einzigen, starr mit dem Schlitten (28) verbundenen Greifarm (23) aufweist, der beide Plattenmagazine (2) bedient und horizontal zwischen und vertikal in den Plattenmagazinen verfahrbar ist, wobei der Greifarm (23) aus seiner eingenommenen Auswahlposition in dem einen oder anderen Plattenmagazin (2) in übereinander liegenden Ausnehmungen (20) der Plattenhalter (4) des jeweiligen Plattenmagazins (2) vertikal verfahrbar ist.

2. Plattenabspielgerät nach Anspruch 1, dadurch gekennzeichnet, daß der Greifarm (23) aus seiner Auswahlposition in dem einen oder anderen Plattenmagazin (2) in eine Auszugposition zur Herausnahme eines bestimmten Plattenhalters (4) bewegbar ist, in der er mit einer sich an die Ausnehmung (20) des Plattenhalters (4) anschließenden, auf halber Höhe des Plattenhalters (4) abgesetzten Beförderungsnase (21) fluchtet.

3. Plattenabspielgerät nach Anspruch 1 oder 2, dadurch gekennzeichnet, daß der Greifarm (23) über eine der Transporteinrichtung (3) zugeordnete Plattenhalter-Erkennungseinrichtung (26) in eine die ausgewählte Platte mit dem Plattenhalter (4) konzentrisch zu dem Plattenteller der Abspieleinheit (5) festlegende Zentrierposition verfahrbar ist.

4. Plattenabspielgerät nach Anspruch 3, dadurch gekennzeichnet, daß der Plattenhalter-Erkennungseinrichtung (26) ein Fühler (52) derart zugeordnet ist, daß bei einer Beaufschlagung des Fühlers (52) durch einen aus einem Plattenmagazin (2) herausgenommenen Plattenhalter (4) der starr mit dem Schlitten (28) der Auszugeinrichtung (8) verbundene Greifarm (23) in eine die ausgewählte Platte mit dem Plattenhalter (4) konzentrisch zu dem Plattenteller der Abspieleinheit (5) festlegende Zentrierposition fährt.

5. Plattenabspielgerät nach einem der Ansprüche 1 bis 4, dadurch gekennzeichnet, daß die gleitbeweglich auf einer Tragstange (32) gelagerte Transporteinrichtung (3) über einen Riemenantrieb (34, 35) mit drehrichtungsumkehrbarem Antriebsmotor (38) auf- und abbewegbar ist.

6. Plattenabspielgerät nach einem der Ansprüche 1 bis 5, dadurch gekennzeichnet, daß die Transporteinrichtung (3) seitlich einen Einschnitt (41) aufweist, der gleitbeweglich eine vertikale, gehäusefeste Führungsstange (42) umgreift.

7. Plattenabspielgerät nach einem der Ansprüche 1 bis 6, dadurch gekennzeichnet, daß der Antriebsmotor (38) der Transporteinrichtung (3) auf seiner Welle (37) eine Codescheibe (39) trägt, die mit einem Positionsimpulse erzeugenden Sensor (40) zusammenwirkt.

8. Plattenabspielgerät nach einem der Ansprüche 1 bis 7, dadurch gekennzeichnet, daß der Transporteinrichtung (3) ein Sensor (27) zur Feststellung ihrer Ausgangsstellung unmittelbar oberhalb der Abspieleinheit (5) zugeordnet ist.

9. Plattenabspielgerät nach einem der Ansprüche 1 bis 8, dadurch gekennzeichnet, daß die drehbeweglich gelagerte Tragstange (32) der Transporteinrichtung (3) über eine Rutschkupplung (43) und das Getriebe (44) mit dem drehrichtungsumkehrbaren Antriebsmotor (45) in Verbindung steht, und daß die Tragstange (32) innerhalb der Transporteinrichtung (3) ein auf ihr verschiebbares, drehfestes Zahnrad (49) trägt, das mit mindestens einem Zahnrad (50) kämmt, das mit einer am Schlitten (28) des Greifarms (23) angebrachten Zahnstange (51) in Eingriff steht.

10. Plattenabspielgerät nach einem der Ansprüche 5 bis 9, dadurch gekennzeichnet, daß die Tragstange (32) mit einer Codescheibe (46) fest verbunden ist, die durch ortsfeste Sensoren (47) zur Erzeugung von Abschaltimpulsen für den Antriebsmotor (45) der Tragstange (32) läuft.

11. Plattenabspielgerät nach Anspruch 10, dadurch gekennzeichnet, daß die Codescheibe (46) als Loch- oder Markierungsscheibe ausgebildet ist.

12. Plattenabspielgerät nach einem der Ansprüche 3 bis 11, dadurch gekennzeichnet, daß die Plattenhalter-Erkennungseinrichtung (26) den im Gehäuse (24) der Transporteinrichtung (3) federbelastet geführten, in die Bewegungsbahn des Plattenhalters (4) vorstehenden mechanischen Fühler (52) umfaßt, der bei einer Beaufschlagung durch den Plattenhalter (4) die Drehbewegung des auf der Tragstange (32) angeordneten Zahnrades (49) begrenzt.

13. Plattenabspielgerät nach Anspruch 12, dadurch gekennzeichnet, daß auf der Oberseite des auf der Tragstange (32) angeordneten Zahnrades (49) ein Stift (55) vorgesehen ist, der im nichtbetätigten Zustand des Fühlers (52) durch einen Durchgang (56) in der Unterseite des Fühlers (52) bewegbar ist und der im betätigten Zustand des Fühlers (52) in der Zentrierstellung des Plattenhalters (4) zu der Abspieleinheit (5) an einem in den Durchgang (56) hineinragenden Anschlag (57) anliegt.

14. Plattenabspielgerät nach Anspruch 12 oder 13, dadurch gekennzeichnet, daß der Fühler (52) auf seiner Oberseite im vorderen Bereich einen Steg (58) aufweist, der im nichtbetätigten Zustand des Fühlers (52) federbelastet an einem gehäusefesten Anschlag (66) anliegt.

15. Plattenabspielgerät nach Anspruch 14, dadurch gekennzeichnet, daß dem gehäusefesten Anschlag (66) für den Steg (58) des Fühlers (52) ein gehäusefester Anschlag (60) im Bereich der Tragstange (32) gegenüberliegt, an dem sich eine Druckfeder (59) abstützt, die mit ihrem anderen Ende an dem Steg (58) des Fühlers (52) anliegt.

16. Plattenabspielgerät nach einem der Ansprüche 12 bis 15, dadurch gekennzeichnet, daß der auf einer Halterung (54) geführte Fühler (52) mit seinem vorderen Bereich eine gehäusefeste Führungsschiene (53) für den Plattenhalter (4) übergreift.

17. Plattenabspielgerät nach einem der Ansprüche 12 bis 16, dadurch gekennzeichnet, daß das Gehäuse (24) der Transporteinrichtung (3) einen Tragarm (25) mit einer der gehäusefesten Führungsschiene (53) gegenüberliegenden Halteschiene (61) für den Plattenhalter (4) aufweist, wobei der Halteschiene (61) mindestens ein Federelement (62) zugeordnet ist, das den Plattenhalter (4) in seiner Zentrierstellung zur Abspieleinheit (5) sichert.

18. Plattenabspielgerät nach Anspruch 17, dadurch gekennzeichnet, daß das Federelement (62) an der Halteschiene (61) angespritzt ist und in einen zugehörigen Einschnitt (65) des Plattenhalters (4) einrastet.

19. Plattenabspielgerät nach Anspruch 17, dadurch gekennzeichnet, daß das Federelement (62) aus einem U-förmigen Bügel besteht, dessen Schenkel (63) in Vertiefungen am Tragarm (25) eingesetzt sind und dessen Steg mittig eine Sicke (64) aufweist, die in einen an der entsprechenden Längsseite des Plattenhalters (4) liegenden Einschnitt (65) eingreift.

20. Plattenabspielgerät nach einem der Ansprüche 1 bis 19, dadurch gekennzeichnet, daß jedes von der Vorderseite eines zugehörigen Gehäuses (1) aus schubfachartig in dieses eingesetzte Plattenmagazin (2) durch mindestens eine lösbare Verbindung in seiner Position gesichert ist.

21. Plattenabspielgerät nach Anspruch 20, dadurch gekennzeichnet, daß die lösbare Verbindung zwischen dem Plattenmagazin (2) und dem Gehäuse (1) als Klipsverbindung ausgebildet ist.

22. Plattenabspielgerät nach einem der Ansprüche 1 bis 21, dadurch gekennzeichnet, daß das Gehäuse (1) für die Aufnahme eines jeden Plattenmagazins (2) zwei gegenüberliegende Führungsschienen (13) aufweist, die mit einer entsprechenden Nut (14) in der Bodenwand (15) bzw. in der Deckenwand (16) des Plattenmagazins (2) korrespondieren.

23. Plattenabspielgerät nach Anspruch 22, dadurch gekennzeichnet, daß in jede Führungsschiene (13) eine Klipszunge (17) mit vorstehender Klipsnase (18) eingeformt ist, die in eine zugehörige Öffnung (19) in der Bodenwand (15) bzw. der Deckenwand (16) des Plattenmagazins (2) einrastet.

24. Plattenabspielgerät nach einem der Ansprüche 1 bis 19, dadurch gekennzeichnet, daß die Plattenmagazine (2) von der Oberseite des Gehäuses (1) aus vertikal auswechselbar in das Gehäuse (1) eingesetzt sind.

25. Plattenabspielgerät nach einem der Ansprüche 1 bis 24, dadurch gekennzeichnet, daß das Gehäuse (1) aus einer Bodenplatte (9) und einer Deckenplatte (10) besteht, die lediglich durch Verbindungselemente (11) miteinander verbunden sind, wobei die Deckenplatte (10) abnehmbar ist, und die Verbindungselemente (11) in ihrer Länge austauschbar sind.

26. Plattenabspielgerät nach Anspruch 25, dadurch gekennzeichnet, daß die Verbindungselemente (11) als Stangen, Winkelbleche, Profile oder dergleichen ausgebildet sind.

27. Plattenabspielgerät nach den Ansprüchen 25 und 26, dadurch gekennzeichnet, daß zwischen den Verbindungselementen (11) der Bodenplatte (9) und der Deckenplatte (10) des Gehäuses (1) Verkleidungselemente vorgesehen sind.

28. Plattenabspielgerät nach einem der Ansprüche 1 bis 27, dadurch gekennzeichnet, daß die zwischen der Deckenplatte (10) und der Bodenplatte (9) mindestens ein Stabilisierungselement (12) vorgesehen ist.

## Claims

1. Disc player, having two oppositely situated disc magazines (2), which have a plurality of disc holders (4), which are mounted one above the other in accommodation compartments (6) and each accommodate one disc, and having a conveying arrangement (3), which is displaceable in the stacking direction of the disc magazines (2), for exchanging a desired disc with the associated disc holder (4) between the accommodation compartment (6) and a playing unit (5), the conveying arrangement (3) including a horizontally displaceable extending arrangement (8), which has a slide (28) with a gripping arm (23), characterised in that the extending arrangement (8) includes only one single gripping arm (23), which is rigidly connected to the slide (28), said arm operating both disc magazines (2) and being displaceable horizontally between and vertically in the disc magazines, the gripping arm (23) being vertically displaceable from its assumed selected position in one or other disc magazine (2) in recesses (20), which lie above one another in the disc holders (4) of the particular disc magazine (2).

2. Disc player according to claim 1, characterised in that the gripping arm (23) is displaceable from its selected position in one or other disc magazine (2) into an extended position for the removal of a predetermined disc holder (4), in which position said arm is in alignment with a conveyor projection (21), which communicates with the recess (20) in the disc holder (4) and is stepped halfway up the disc holder (4).

3. Disc player according to claim 1 or 2, characterised in that the gripping arm (23) is displaceable into a central position, which secures the selected disc with the disc holder (4) concentrically relative to the disc plate of the playing unit (5), via a disc holder detecting means (26) associated with the conveying arrangement (3).

4. Disc player according to claim 3, characterised in that the disc holder detecting means (26) has associated therewith a feeler (52), so that, when the feeler (52) is impinged by a disc holder (4) removed from a disc magazine (2), the gripping arm (23), which is rigidly connected to the slide (28) of the extending arrangement (8), travels into a central position, which secures the selected disc with the disc holder (4) concentrically relative to the disc plate of the playing unit (5).

5. Disc player according to one of claims 1 to 4, characterised in that the conveying arrangement (3), which is slidingly mounted on a supporting rod (32), is upwardly and downwardly displaceable by means of a drive motor (38), which has a reversible direction of rotation, via a belt drive (34, 35).

6. Disc player according to one of claims 1 to 5, characterised in that the conveying arrangement (3) is provided laterally with an incision (41), which slidingly surrounds a vertical guide rod (42) fixed to the housing.

7. Disc player according to one of claims 1 to 6, characterised in that the drive motor (38) of the conveying arrangement (3) is provided, on its shaft (37), with a code disc (39), which co-operates with a sensor (40), which generates positional pulses.

8. Disc player according to one of claims 1 to 7, characterised in that the conveying arrangement (3) has associated therewith a sensor (27) for ascertaining its initial position directly above the playing unit (5).

9. Disc player according to one of claims 1 to 8, characterised in that the rotatably mounted supporting rod (32) of the conveying arrangement (3) communicates with the drive motor (45), which has a reversible direction of rotation, via a sliding coupling (43) and the transmission unit (44), and in that the supporting rod (32) internally of the conveying arrangement (3) has a non-rotatable toothed wheel (49), which is displaceable on said rod and meshes with at least one toothed wheel (50), which is in engagement with a toothed rod (51) mounted on the slide (28) of the gripping arm (23).

10. Disc player according to one of claims 5 to 9, characterised in that the supporting rod (32) is securedly connected to a code disc (46), which passes through stationary sensors (47) to generate disconnection pulses for the drive motor (45) of the supporting rod (32).

11. Disc player according to claim 10, characterised in that the code disc (46) is configured as a perforate or marker disc.

12. Disc player according to one of claims 3 to 11, characterised in that the disc holder detecting means (26) includes the mechanical feeler (52), which is guided in a spring-loaded manner in the housing (24) of the conveying arrangement (3) and protrudes into the path of movement of the disc holder (4), said feeler defining the rotary movement of the toothed wheel (49), which is disposed on the supporting rod (32), upon impingement by the disc holder (4).

13. Disc player according to claim 12, characterised in that a pin (55) is provided on the upper surface of the toothed wheel (49) disposed on the supporting rod (32), said pin being displaceable through a passage (56) in the underside of the feeler (52) when the feeler (52) is in its non-actuated state, and said pin abutting against a stop member (57), which protrudes into the passage (56), in the central position of the disc holder (4) relative to the playing unit (5) when the feeler (52) is in its actuated state.

14. Disc player according to claim 12 or 13, characterised in that the feeler (52) has on its upper surface, in the front region, a web (58) which abuts against a stop member (66), which is fixed to the housing, in a spring-loaded manner when the feeler (52) is in the non-actuated state.

15. Disc player according to claim 14, characterised in that a stop member (60), fixed to the housing, is situated opposite the stop member (66), fixed to the housing, for the web (58) of the feeler (52) in the region of the supporting rod (32), a compression spring (59) being supported on said stop member (60) and abutting with its other end against the web (58) of the feeler (52).

16. Disc player according to one of claims 12 to 15, characterised in that the feeler (52), which is guided on a holder (54), overlaps with its front region a guide rail (53), fixed to the housing, for the disc holder (4).

17. Disc player according to one of claims 12 to 16, characterised in that the housing (24) of the conveying arrangement (3) has a supporting arm (25) with a retaining rail (61) for the disc holder (4), said retaining rail being situated opposite the guide rail (53) which is fixed to the housing, the retaining rail (61) having at least one resilient element (62) associated therewith, which element secures the disc holder (4) in its central position relative to the playing unit (5).

18. Disc player according to claim 17, characterised in that the resilient element (62) is injection-moulded on the retaining rail (61) and engages in an associated incision (65) in the disc holder (4).

19. Disc player according to claim 17, characterised in that the resilient element (62) comprises a U-shaped clamp, the legs (63) of which are inserted in indentations in the supporting arm (25), and the web of which is provided centrally with a bead (64), which engages in an incision (65) situated on the corresponding longitudinal side of the disc holder (4).

20. Disc player according to one of claims 1 to 19, characterised in that each disc magazine (2), which is inserted into an associated housing (1) from the front side of said housing in a drawer-type manner, is secured in its position by at least one detachable connection.

21. Disc player according to claim 20, characterised in that the detachable connection between the disc magazine (2) and the housing (1) is configured as a clip-in connection.

22. Disc player according to one of claims 1 to 21, characterised in that the housing (1) for accommodating each disc magazine (2) has two oppositely situated guide rails (13), which correspond with an appropriate groove (14) in the bottom wall (15) or respectively in the top wall (16) of the disc magazine (2).

23. Disc player according to claim 22, characterised in that a clip-in projection (17) with a protruding clip-in nose (18) is shaped to fit in each guide rail (13) and locks in an associated aperture (19) in the bottom wall (15) or respectively in the top wall (16) of the disc magazine (2).

24. Disc player according to one of claims 1 to 19, characterised in that the disc magazines (2) are inserted into the housing (1) in a vertically interchangeable manner from the upper side of the housing (1).

25. Disc player according to one of claims 1 to 24, characterised in that the housing (1) comprises a bottom plate (9) and a top plate (10), which plates are interconnected solely by connection elements (11), the top plate (10) being removable, and the connection elements (11) being changeable in respect of their length.

26. Disc player according to claim 25, characterised in that the connection elements (11) are configured as rods, angular pieces of sheet metal, profiles or the like.

27. Disc player according to claims 25 and 26, characterised in that covering elements are provided between the connection elements (11) of the bottom plate (9) and the top plate (10) of the housing (1).

28. Disc player according to one of claims 1 to 27, characterised in that at least one stabilising element (12) is provided between the top plate (10) and the bottom plate (9).

## Revendications

1. Tourne-disque avec deux magasins à disques (2) se faisant face, qui comportent une pluralité de supports de disque (4) logeant chacun un disque, montés superposés dans des casiers de réception (6), et avec un dispositif de transport (3), déplaçable suivant le sens d'empilement des magasins à disques (2), pour l'échange d'un disque souhaité avec le support de disque (4) associé entre le casier de réception (6) et une unité de lecture (5), le dispositif de transport (3) comprenant un dispositif d'extraction (8), déplaçable horizontalement, comportant un chariot (28) avec un bras de préhension (23), caractérisé en ce que le dispositif d'extraction (8) ne comporte qu'un seul bras de préhension (23), relié rigidement avec le chariot (28), qui dessert deux magasins à disques (2) et est déplaçable horizontalement entre les magasins à disques et verticalement dans les magasins à disques, le bras de préhension (23) étant déplaçable verticalement de sa position de sélection prise dans l'un ou l'autre magasin à disques (2) dans des évidements superposés (20) des supports de disque (4) du magasin à disques respectif (2).

2. Tourne-disque selon la revendication 1, caractérisé en ce que le bras de préhension (23) est déplaçable de sa position de sélection dans l'un ou l'autre magasin à disques (2), dans une position d'extraction en vue de l'extraction d'un support de disque déterminé (4), dans laquelle il est aligné avec un ergot de transport (21) se rattachant à l'évidement (20) du support de disque (4), disposé à mi-hauteur du support de disque (4).

3. Tourne-disque selon la revendication 1 ou 2, caractérisé en ce que le bras de préhension (23) est déplaçable, par un dispositif de reconnaissance de support de disque (26) associé au dispositif de transport (3), dans une position de centrage fixant le disque sélectionné avec le support de disque (4) concentriquement au plateau tourne-disque de l'unité de lecture (5).

4. Tourne-disque selon la revendication 3, caractérisé en ce qu'au dispositif de reconnaissance de support de disque (26) est associé un palpeur (52) de telle manière que lors d'une sollicitation du palpeur (52) par un support de disque (4) extrait d'un magasin à disques (2), le bras de préhension (23) relié rigidement au chariot (28) du dispositif d'extraction (8) passe dans une position de centrage fixant le disque sélectionné avec le support de disque (4) concentriquement au plateau tourne-disque de l'unité de lecture (5).

5. Tourne-disque selon l'une des revendications 1 à 4, caractérisé en ce que le dispositif de transport (3) monté mobile à coulissement sur une tige porteuse (32) est déplaçable en montée et en descente par un entraînement à courroie (34, 35) avec moteur d'entraînement (38) dont le sens de rotation est réversible.

6. Tourne-disque selon l'une des revendications 1 à 5, caractérisé en ce que le dispositif de transport (3) présente latéralement une encoche (41), qui entoure de façon mobile à glissement une tige de guidage (42) verticale, solidaire du bâti.

7. Tourne-disque selon l'une des revendications 1 à 6, caractérisé en ce que le moteur d'entraînement (38) du dispositif de transport (3) porte sur son arbre (37) un disque à code (39) qui coopère avec un capteur (40) produisant des impulsions de position.

8. Tourne-disque selon l'une des revendications 1 à 7, caractérisé en ce qu'au dispositif de transport (3) est associé un capteur (27) pour constater sa position de sortie, directement au-dessus de l'unité de lecture (5).

9. Tourne-disque selon l'une des revendications 1 à 8, caractérisé en ce que la tige porteuse montée mobile à rotation (32) du dispositif de transport (3), est en liaison avec le moteur d'entraînement à sens de rotation réversible (45) par un accouplement à glissement (43) et la transmission (44), et en ce qu'à l'intérieur du dispositif de transport (3), la tige porteuse (32) porte une roue dentée (49) solidaire en rotation, déplaçable sur celle-ci, qui engrène avec au moins une roue dentée (50), qui est en prise avec une crémaillère (51) placée sur le chariot (28) du bras de préhension (23).

10. Tourne-disque selon l'une des revendications 5 à 9, caractérisé en ce que la tige porteuse (32) est reliée fixement avec un disque à code (46), qui tourne à travers des capteurs stationnaires (47), pour produire des impulsions de coupure pour le moteur d'entraînement (45) de la tige porteuse (32).

11. Tourne-disque selon la revendication 10, caractérisé en ce que le disque à code (46) est conformé en disque à trous ou disques à marquage.

12. Tourne-disque selon l'une des revendications 3 à 11, caractérisé en ce que le dispositif de reconnaissance de support de disque (26) comprend le palpeur (52) mécanique guidé sous l'action d'un ressort dans le carter (24) du dispositif de transport (3), dépassant dans la trajectoire du support de disque (4), palpeur qui, dans le cas d'une sollicitation par le support de disque (4), limite le mouvement de rotation de la roue dentée (49) placée sur la tige de support (32).

13. Tourne-disque selon la revendication 12, caractérisé en ce que sur la face supérieure de la roue dentée (49) placée sur la tige porteuse (32) est prévu un téton (55), qui à l'état non actionné du palpeur (52), est déplaçable à travers un passage (56), dans la face inférieure du palpeur (52) et qui, à l'état actionné du palpeur (52) dans la position de centrage du support de disque (4) par rapport à l'unité de lecture (5), s'applique contre une butée (57) pénétrant dans le passage (56).

14. Tourne-disque selon la revendication 12 ou 13, caractérisé en ce que le palpeur (52) présente, sur sa face supérieure, dans la zone avant, une traverse (58), qui à l'état non actionné du palpeur (52), s'applique, sous l'action d'un ressort, contre une butée (66) solidaire du carter.

15. Tourne-disque selon la revendication 14, caractérisé en ce qu'à la butée (66) solidaire du carter pour la traverse (58) du palpeur (52), fait face une butée (60) solidaire du carter, dans la région de la tige porteuse (32), contre laquelle prend appui un ressort de pression (59), qui s'applique avec son autre extrémité contre la traverse (58) du palpeur (52).

16. Tourne-disque selon l'une des revendications 12 à 15, caractérisé en ce que le palpeur (52), guidé sur une fixation (54) passe, avec sa zone avant, sur un rail de guidage (53) solidaire du carter pour le support de disque (4).

17. Tourne-disque selon l'une des revendications 12 à 16, caractérisé en ce que le carter (24) du dispositif de transport (3) comporte un bras porteur (25) avec un rail de maintien (61) situé à l'opposé du rail de guidage (53) solidaire du carter, pour le support de disque (4), au rail de maintien (61) étant associé au moins un élément à ressort (62), qui bloque le support de disque (4) dans sa position de centrage par rapport à l'unité de lecture (5).

18. Tourne-disque selon la revendication 17, caractérisé en ce que l'élément à ressort (62) est moulé par injection sur le rail de maintien (61) et s'encastre dans une encoche correspondante (65) du support de disque (4).

19. Tourne-disque selon la revendication 17, caractérisé en ce que l'élément à ressort (62) est constitué d'un étrier en U, dont les branches (63) sont insérées dans des enfoncements du bras porteur (25) et dont la traverse présente au milieu une moulure (64), qui s'engage dans une encoche (65) située sur le côté longitudinal correspondant du support de disque (4).

20. Tourne-disque selon l'une des revendications 1 à 19, caractérisé en ce que chaque magasin à disques (2) inséré à la manière d'un tiroir dans un bâti associé (1), à partir du côté avant de ce bâti, est bloqué dans sa position par au moins une liaison amovible.

21. Tourne-disque selon la revendication 20, caractérisé en ce que la liaison amovible entre le magasin à disques (2) et le bâti (1) est formée comme une liaison clipsée.

22. Tourne-disque selon l'une des revendications 1 à 21, caractérisé en ce que le bâti (1) présente, pour le logement de chaque magasin à disques (2), deux rails de guidage (13) se faisant face, qui correspondent à une rainure correspondante (14) dans la paroi de fond (15) ou dans la paroi de couverture (16) du magasin à disques (2).

23. Tourne-disque selon la revendication 22, caractérisé en ce que dans chaque rail de guidage (13) est formée une languette de clipsage (17) avec ergot de clipsage saillant (18), qui s'encastre dans un orifice associé (19) dans la paroi de fond (15) ou dans la paroi de couverture (16) du magasin à disques (2).

24. Tourne-disque selon l'une des revendications 1 à 19, caractérisé en ce que les magasins à disques (2) sont insérés dans le bâti (1), de manière interchangeable verticalement, à partir du côté supérieur du bâti (1).

25. Tourne-disque selon l'une des revendications 1 à 24, caractérisé en ce que le bâti (1) est constitué d'une plaque de fond (9) et d'une plaque de couverture (10) qui sont reliées uniquement entre elles par des éléments de liaison (11), la plaque de couverture (10) étant amovible et les éléments de liaison (11) étant de longueur échangeable.

26. Tourne-disque selon la revendication 25, caractérisé en ce que les éléments de liaison (11) sont des tringles, des cornières, des profilés ou similaires.

27. Tourne-disque selon les revendications 25 et 26, caractérisé en ce qu'entre les éléments de liaison (11) de la plaque de fond (9) et de la plaque de couverture (10) du bâti (1) sont prévus des éléments de revêtement.

28. Tourne-disque selon l'une des revendications 1 à 27, caractérisé en ce qu'au moins un élément de stabilisation (12) est prévu entre la plaque de couverture (10) et la plaque de fond (9).
